# NEUE EUROPÄISCHE PATENTSCHRIFT

(11) **EP 3 516 963 B2**
(45) Veröffentlichungstag und Bekanntmachung des Hinweises auf die Entscheidung über den Einspruch: **22.10.2025**
(45) Hinweis auf die Patenterteilung: 10.03.2021
(21) Anmeldenummer: 19153278.7
(22) Anmeldetag: 23.01.2019
(51) Int. Cl.: A22C 13/00

(54) **RAUCH- UND WASSERDAMPFDURCHLÄSSIGE NAHRUNGSMITTELHÜLLE MIT OPTIMIERTEN HAFTEIGENSCHAFTEN**
SMOKE AND WATER VAPOUR-PERMEABLE FOOD CASING WITH OPTIMIZED BONDING PROPERTIES
ENVELOPPE POUR ALIMENTS PERMÉABLE À LA VAPEUR D´EAU AVEC DES PROPRIÉTÉS ADHÉSIVES OPTIMISÉES

(30) Priorität: 26.01.2018 DE 102018201241
(43) Veröffentlichungstag der Anmeldung: 31.07.2019
(73) Patentinhaber: Kalle GmbH, 65203 Wiesbaden (DE)
(72) Erfinder: Delius, Ulrich, 60529 Frankfurt a.M. (DE); Raskita, Igor, 65183 Wiesbaden (DE)
(74) Vertreter: Plate, Jürgen

(56) Entgegenhaltungen:
- EP-A1- 3 014 996
- WO-A2-2012/134347

## Beschreibung

Die Erfindung betrifft eine schlauchförmige, nahtlose, wasserdampfdurchlässige, räucherbare, biaxial streckorientierte und teilweise oder vollständig thermofixierte Nahrungsmittelhülle mit mindestens zwei Schichten auf Basis von thermoplastischen Polymeren. Sie weist eine hohe Permeabilität für Rauch und Wasserdampf sowie gezielt einstellbare Haftungseigenschaften gegenüber dem Füllgut auf. Die Nahrungsmittelhülle ist verwendbar als künstliche Wursthülle, insbesondere für luftgetrocknete, gegebenenfalls geräucherte Rohwurst, speziell für Salami.

Zur Herstellung von geräucherten und/oder getrockneten Wurstwaren werden traditionell Hüllen auf Basis von regenerierter Cellulose oder von Kollagen eingesetzt. Die Herstellung dieser Hüllen ist jedoch technisch aufwendig. So werden Cellulosehüllen in der Regel nach dem Viskoseverfahren hergestellt. In diesem Verfahren wird Cellulose zunächst mit Hilfe von Natronlauge und Schwefelkohlenstoff (CS₂) in Cellulosexanthogenat umgewandelt. Die dabei entstehende sogenannte Viskoselösung muß zunächst mehrere Tage reifen, bevor sie den Darmspinnmaschinen zugeleitet wird. Diese Maschinen bestehen im Wesentlichen aus einer Spinndüse, Fällbädern, Wasch- und Präparationsbädern sowie Trockenstationen. In den Fällbädern wird das Cellulosexanthogenat zu Cellulose regeneriert. Kollagendärme - auch als Hautfaserdärme bezeichnet - bestehen aus gehärtetem Bindegewebseiweiß. Bei ihrer Herstellung wird zunächst Bindegewebe aus Tierhäuten mechanisch zerkleinert und chemisch aufgeschlossen. Die dabei entstehende homogenisierte Masse wird dann in einem Trocken- oder Naßspinnverfahren weiterverarbeitet. Im Naßspinnverfahren wird die Kollagenmasse nach dem Extrudieren durch eine Ringdüse in einem koagulierend wirkenden Fällbad verfestigt (G. Effenberger, Wursthüllen - Kunstdarm, Holzmann-Buchverlag, Bad Wörishofen, 2. Aufl. [1991] S. 21 - 27).

Als Alternative zu vorgenannten Hüllen wurden rauch- und wasserdampfdurchlässige Hüllen auf Basis synthetischer Polymere beschrieben und in den Markt eingeführt.

In der EP 1 380 212 A1 sind (verstreckte) Hüllen aus einer Mischung eines Copolyamids (PA6/66, 85:15) und eines vernetzten N-Vinylpyrrolidon-Polymers ("PVPP") beschrieben. In den Beispielen der EP '212 ist der Anteil PVPP in der Mischung von 4 bis 50 % variiert. Angegeben sind Werte für die Wasserdampfdurchlässigkeit im Bereich 1000 bis ≤ 2000 g /m² 24h, gemessen bei 40°C und 90% r. F. Zusätzlich ist der Gewichtsverlust bei Wurstabfüllungen nach 15 Tagen und nach 2 Monaten angegeben. Als Vergleich sind die Werte einer Cellulose-Faserhülle angegeben. Der Gewichtsverlust der Wurst in Cellulose-Faserhüllen nach 15 Tagen war wesentlich höher als bei den Hüllen aus Copolyamid und PVPP.

Die DE 103 30 762 A1 offenbart eine rauch- und wasserdampfdurchlässige Nahrungsmittelhülle auf Basis von aliphatischem Polyamid und/ oder aliphatischem Copolyamid, die durchlässig für Rauch und Wasserdampf ist und auf der Seite mit Nahrungsmittel-Kontakt mit Flüssigrauch imprägniert ist. Die Hülle besteht aus einem Gemisch, das a) mindestens ein aliphatisches Polyamid und/oder aliphatisches Copolyamid sowie b) mindestens ein anderes thermoplastifizierbares Polymer oder Copolymer umfaßt. Eine Ausführungsform gemäß DE '762 betrifft eine mehrschichtige, nahtlose, biaxial verstreckte und thermofixierte Schlauchfolie, wobei die innere, d.h. die Schicht, die mit dem Lebensmittel in Kontakt tritt, mindestens ein aliphatisches Polyamid und/oder aliphatisches Copolyamid und mindestens ein anderes thermoplastifiziebares Polymer umfaßt.

Aus der DE 20 2004 021 408 U1 ist eine räucherbare flächen- oder schlauchförmige, bi-direktional verstreckte Nahrungsmittelhülle oder -folie auf Polymerbasis bekannt. Die Nahrungsmittelhülle oder -folie kann ein- oder mehrschichtig ausgebildet sein, wobei die Schichten jeweils aus einer Mischung von Polyamid, Polyvinylalkohol und Polyätherblockamid gebildet sind.

In der WO 09/078455 A1 sind Folien für das Räuchern und/oder Trocknen von Lebensmitteln bestehend aus einer Polyamid-Matrix mit einer fein dispergierten hydrophilen Komponente beschrieben. Letztere ist beispielsweise ein (Co)Polymer von N-Vinylpyrrolidon, Vinylalkohol, oder Polyethylenglykol. Die hydrophile Komponente liegt in der Polyamidmatrix in Form von Domänen mit einem Durchmesser von 0,1 bis 3 µm in der Folienebene vor. In den Beispielen sind biaxial verstreckte Hüllen mit Wasserdampfdurchlässigkeiten im Bereich von 211 bis 509 g /m² 24h offenbart, gemessen bei 30°C und 65% r.F. Als Vergleich ist eine Kollagenhülle ("Cutisin") mit einer Durchlässigkeit von 1200 g /m² 24h unter gleichen Bedingungen genannt.

In der DE 103 02 960 A1 ist eine biaxial orientierte rauchdurchlässige Hülle beansprucht, die aliphatisches Polyamid oder Copolyamid und mindestens ein wasserlösliches synthetisches Polymer umfasst und eine Wasserdampfdurchlässigkeit im Bereich von 40 bis 200 g /m² d aufweist. Das wasserlösliche Polymer ist vorzugsweise ein Polyvinylalkohol, ein Polyalkylenglykol, eine Vinylpyrrolidon-(Co-)polymer, ein Polymerisat von N-Vinylalkylamiden oder ein (Co-)Polymer mit Einheiten von α,β-ungesättigten Carbonsäuren bzw. α,β-ungesättigten Carbonsäureamiden. In den Beispielen sind Hüllen mit einer Wasserdampfdurchlässigkeit im Bereich von 81 bis 110 g /m² d genannt, gemessen bei 23°C und 85% r. F.

Gegenstand der EP 3 014 996 A1 ist eine mehrschichtige schlauchförmige Nahrungsmittelhülle mit einer Barriereschicht für Sauerstoff und Wasserdampf und einer porösen Innenschicht, die ein Additiv, beispielsweise einen Farb- oder Aromastoff, aufnehmen, speichern und an ein in der Hülle befindliches Nahrungsmittel abgeben kann. Die poröse Innenschicht enthält ein thermoplastisches organisches Polymer, bevorzugt ein Polyolefin, Polyamid, ein Vinylcopolymer, ein Vinylidenchlorid(co)polymer oder einen (Co-)Polyester. Zusätzlich kann die poröse Innenschicht hydrophile Komponenten enthalten, beispielsweise Polyetherester, Polyether-block-amide oder Copolyesteretheramide.

Die in den genannten Schriften genannten Wasserdampfdurchlässigkeiten wurden unter verschiedenen Klimabedingungen gemessen und sind untereinander nicht vergleichbar. In der EP 1 380 212 A1 und der WO 09/078455 A2 zeigt die als Vergleich hinzugezogene Cellulose-Faserhülle bzw. Kollagenhülle, daß letztere in der Wasserdampfdurchlässigkeit der jeweils beanspruchten Polyamid-basierten Hülle deutlich überlegen ist.

Ein generelles Defizit der oben beschriebenen Hüllen ist ihre starke Adhäsion am Füllgut, d.h. insbesondere an der Wurstmasse. Die starke Haftung läßt sich anhand der Polyamide erklären, die bei allen diesen Hüllen die Matrix bilden und damit die Oberflächeneigenschaften determinieren. Die in Polyamiden enthaltenen Amidgruppen sind chemisch analog zu den Amidgruppen des Fleisch-Proteins. Beide Arten von Amidgruppen können untereinander Wasserstoff-Brückenbindungen ausbilden, welche energetisch begünstigt sind und Adhäsionskräfte in der Grenzfläche Polyamid/Protein ausbilden.

Bei Hüllen auf Basis regenerierter Cellulose ist die Adhäsion zur Wurstmasse häufig ebenfalls hoch. Bei diesen Hüllen sind seit langem Oberflächenmodifizierungen üblich, um die Polarität der Cellulose-Oberfläche zu vermindern bzw. auf den Anwendungsfall einzustellen. Üblicherweise beaufschlagt man die Innenseiten dieser Hüllen mit einem reaktiven Hydrophobiermittel, welches sich chemisch an die Hydroxylgruppen der Cellulose bindet. Gängige reaktive Hydrophobiermittel sind z.B. Alkyldiketene und Chrom-Fettsäure-Komplexe (siehe u.a. GB 887 466 A, US 3 582 364 A und DE 34 47 026 A1).

Für den Anwender ist starke Adhäsion an der Wurstmasse nachteilig, da diese das Abschälen der Hülle erschwert oder gar unmöglich macht. Eine sehr niedrige Adhäsion ist ebenfalls unerwünscht; diese kann zum "Abheben" der Hülle von der Fleischoberfläche während der Wurstherstellung und in der Folge zur Ansammlung von Fleischsaft oder zu Schimmelwachstum im Zwischenraum Wurst / Hülle führen. Um alle Anwendungsfälle bei geräucherten und/oder getrockneten Wurstwaren abzudecken, wird vom Anwender ein Hüllensortiment mit abgestufter Adhäsion benötigt.

Demgemäß stellte sich die Aufgabe, eine permeable Kunststoffhülle mit gezielt einstellbarer Adhäsion der inneren Oberfläche am Füllgut Wurstmasse bereitzustellen. Gleichzeitig sollte die Hülle die für die Herstellung von geräucherten und/oder getrockneten Wurstwaren geltenden technischen Anforderungen, speziell Platzfestigkeit, Temperaturbeständigkeit, Formtreue sowie hohe Rauch- und Wasserdampfdurchlässigkeit erfüllen. Die Hülle sollte darüber hinaus kostengünstig und einfach in der Herstellung sein.

Gelöst wurde die Aufgabe mit einer schlauchförmigen Hülle, die eine oder mehrere Schichten auf Basis einer Mischung von aliphatischem (Co)Polyamid und einem oder mehreren hydrophilen Polymeren und eine weitere, auf der Innenseite der Hülle angeordneten Schicht auf Basis einer Mischung von aliphatischem (Co)Polyamid und einem Block-Copolymer vom Typ Polyether-amid, Polyether-ester oder Polyether-urethan aufweist. Durch das Mischungsverhältnis der für die Innenschicht eingesetzten Polymere läßt sich die Adhäsion einstellen.

Gegenstand der Erfindung ist somit eine nahtlose, schlauchförmige, mindestens zweischichtige, wasserdampf- und rauchdurchlässige, biaxial streckorientierte und teilweise oder vollständig thermofixierte Nahrungsmittelhülle mit mindestens zwei Schichten auf Basis von thermoplastischen Polymeren, die dadurch gekennzeichnet, ist, dass mindestens eine Schicht A, die nicht die Innenschicht bildet, ein Blend aus aliphatischem (Co-)Polyamid und mindestens einem hydrophilen Polymeren umfasst, und dass die an der inneren Oberfläche liegenden Schicht I aus einem Blend aus 40 bis 90 Gew.-% eines oder mehrerer aliphatischer (Co-)Polyamide und 60 bis 10 Gew.-% eines Block-Copolymers, ausgewählt aus Polyether-amid, Polyether-ester oder Polyether-urethan besteht, wobei die Innenschicht I gegebenenfalls eine oder mehrere Additiv(e) enthält, ausgewählt aus Mitteln welche die Blockneigung der Hüllenoberflächen aneinander verringern, Polysacchariden, mineralischen Füllstoffen, Farbstoffen und Pigmenten.

Überraschenderweise wurde gefunden, daß Schichten aus Blends von aliphatischen (Co)Polyamiden mit Block-Copolymeren der vorgenannten Typen eine deutlich geringere Haftung zur Wurstmasse ausbilden als Schichten allein aus entsprechenden (Co-)Polyamiden.

Der Begriff "(Co-)Polyamid" wird im Zusammenhang mit der vorliegenden Erfindung als Kurzbezeichnung für "Polyamid und/oder Copolyamid" verwendet. Zu den aliphatischen Copolyamiden werden auch heterofunktionelle Polyamide, beispielsweise Polyetheramide, Polyesteramide, Polyetheresteramide und Polyamidurethane gerechnet. "(Meth)acrylsäure", "(Meth)acrylamid" usw. stehen für "Acrylsäure und/oder Methacrylsäure" bzw. "Acrylamid und/oder Methacrylamid". Von den aliphatischen (Co-)Polyamiden werden Poly(ε-caprolactam), auch bezeichnet als PA 6, Copolyamide aus ε-Caprolactam und ω-Laurinlactam (= PA 6/12), Copolyamide aus ε-Caprolactam, Hexamethylendiamin und Adipinsäure (=PA 6/66) sowie Copolyamide aus ε-Caprolactam, 3-Aminomethyl-3,5,5-trimethylcyclohexylamin (Isophorondiamin) und Isophthalsäure bevorzugt. Besonders bevorzugt sind Copolyamide des Typs PA 6/12 und PA6/66. Die Schicht A kann somit neben aliphatischen auch isocyclische oder aromatische Diamin- oder Dicarbonsäure-Einheiten enthalten. Als "isocylisch" werden hier Verbindungen bezeichnet, die einen gesättigten Kohlenstoffring enthalten (z.B. Isophorondiamin).

Die Hülle weist zumindest eine Schicht A auf aus einem Blend umfassend 60 bis 95 Gew.-% eines oder mehrerer aliphatischer (Co-)Polyamide und 5 bis 40 Gew.-% eines oder mehrerer hydrophiler Polymere. Vorzugsweise besteht die Schicht aus diesem Blend und gegebenenfalls den unten genannten Additiven, die darin in untergeordneten Mengen enthalten sind. Der Anteil an Additiv(en) beträgt allgemein nicht mehr als 10 Gew.-%, bevorzugt nicht mehr als 7 Gew.-%, jeweils bezogen auf das Gewicht der Schicht.

Das hydrophile Polymer ist vorzugsweise
a) ein Polyvinylpyrrolidon (PVP) oder ein wasserlösliches Copolymer mit Vinylpyrrolidon-Einheiten und Einheiten aus mindestens einem α,β-olefinisch ungesättigtem Monomer,
b) ein Polyvinylalkohol (PVAL), wie er erhältlich ist durch teilweise oder vollständige Verseifung von Polyvinylacetat (PVAC), oder ein Copolymer mit Vinylalkohol-Einheiten (beispielsweise ein Copolymer mit Einheiten aus Vinylalkohol und Propen-1-ol),
c) ein Polyalkylenglykol, insbesondere Polyethylenglykol, Polypropylenglykol oder ein entsprechendes Copolymer mit Alkylenglykol-Einheiten, insbesondere Ethylenglykol- und/oder Propylenglykol-Einheiten, und Einheiten von anderen Monomeren,
d) ein Polymerisat von N-Vinylalkylamiden, z.B. Poly(N-vinylformamid), Poly-(N-vinyl-acetamid) oder
e) ein (Co-)Polymer aus bzw. mit Einheiten von α,β-ungesättigten Carbonsäuren oder α,β-ungesättigten Carbonsäureamiden, insbesondere mit Einheiten von (Meth)acrylsäure und/oder (Meth)acrylamid.

Von diesen Gruppen ist a) besonders bevorzugt. Ganz besonders bevorzugt ist ein PVP mit einem K-Wert (nach Fickentscher) im Bereich von 12 bis 50.

Gegebenenfalls enthält der Blend noch Additive, welche dessen thermoplastische Verarbeitbarkeit verbessern und/oder die Eigenschaften der Hülle beeinflussen. Beeinflussbare Eigenschaften sind z.B. Farbe, Transparenz, Haptik, Blockneigung der Hüllenlagen untereinander und das Feuchtespeichervermögen der Hülle. Zur Verbesserung von thermoplastischer Verarbeitbarkeit und Transparenz der Hülle werden vorzugsweise organische Polyhydroxyverbindungen eingesetzt. Besonders bevorzugte Polyhydroxyverbindungen sind Ethylenglykol, Propylenglykol, Glycerin, Diglycerin und Pentaerythrit. Additive zur Beeinflussung der sonstigen Hülleneigenschaften sind z. B. Polysaccharide wie Stärke oder Stärkederivate, anorganische Füllstoffe wie Calciumcarbonat, Bariumsulfat, Talkum, Glimmer etc. sowie Farbpigmente.

Die an der inneren Hüllenoberfläche liegende Schicht I, die in Kontakt mit dem Nahrungsmittel kommt, besteht aus einem Blend aus 40 bis 90 Gew.-% eines oder mehrerer aliphatischer (Co-)Polyamide (wie bereits definiert) und 10 bis 60 Gew.% eines Block-Copolymers vom Typ Polyether-amid, Polyether-ester oder Polyether-urethan. Gegebenenfalls besteht die Schicht I aus diesem Blend und einem oder mehreren der unten genannten Additive. Unter dieser Art Block-Copolymere werden Kettenmoleküle verstanden, in denen Blöcke (bzw. Segmente) aus aliphatischen Polyethern eingebaut sind. Die Polyether-blöcke basieren wiederum auf aliphatischen Diolen, bevorzugt 1,2-Ethandiol (→ Polyethylenglykol), 1,2-Propandiol (→ Polypropylenglykol) oder 1,4-Butandiol (→ Polytetramethylenglykol, auch Poly-THF genannt). Die übrigen Segmente sind Blöcke aus aliphatischem Polyamid (im Fall der Polyether-amide) bzw. solche aus teilaromatischem Polyester (im Fall der Polyether-ester) bzw. solche aus aromatischen oder aliphatischen Polyurethanen (im Fall der Polyether-urethane). Die Polyether-Blöcke sind entlang der Polymerketten alternierend zu den Blöcken aus Polyamid bzw. Polyester bzw. Polyurethan angeordnet und endständig kovalent an letztere gebunden.

Block-co-polyether-amide dieser Art sind kommerziell unter dem Namen Pebax^{®} erhältlich (Hersteller Arkema SA). Entsprechende Block-co-polyether-ester werden unter dem Namen Arnitel^{®} vertrieben (Hersteller DSM). Entsprechende Block-co-polyether-urethane werden z. B, unter dem Namen Irogran^{®} A angeboten (Hersteller Huntsman International LLC).

Besonders bevorzugt sind Block-co-polyether-amide mit Blöcken aus Polyethylenglykol und aus Poly(ε-caprolactam) bzw. Poly(ω-laurinlactam) sowie Block-co-polyether-ester mit Blöcken aus Polyethylenglykol und aus Polybutylenterephthalat.

Gegebenenfalls enthält auch letztgenannter Blend Additive, welche die thermoplastische Verarbeitbarkeit und/oder die Eigenschaften der Hülle beeinflussen. Hierzu zählen beispielsweise Mittel, welche die Blockneigung der Hüllenoberflächen aneinander verringern, insbesondere Polysaccharide und mineralische Füllstoffe wie Calciumcarbonat oder Farbstoffe und/oder Pigmente.

Die Gesamtdicke der Hüllenwand liegt allgemein im Bereich 15 bis 80 µm, vorzugsweise im Bereich 25 bis 50 µm. Die Innenschicht I hat allgemein eine Dicke im Bereich 2 bis 12 µm. Sie trägt allgemein 3 bis 25 %, vorzugsweise 5 bis 15 % zur Gesamtdicke der Hüllenwand bei. Vorzugsweise besteht die Nahrungsmittelhülle aus einer oder zwei Schichten A und der Innenschicht I. Wenn zwei Schichten A vorhanden sind, dann weisen diese vorzugsweise eine unterschiedliche Zusammensetzung auf.

Gegebenenfalls ist die erfindungsgemäße Hülle eingefärbt durch Farbstoffe und/oder Pigmente, die einem oder mehreren der vorgenannten Blends hinzugefügt werden.

Die erfindungsgemäße Nahrungsmittelhülle weist vorzugsweise eine Wasserdampfdurchlässigkeit von 80 bis 220 g/m² d, besonders bevorzugt von 100 bis 180 g/m² d auf, gemessen gemäß DIN ISO 15106-3 bei einem Feuchtegefälle von 85 zu 0 % und einer Temperatur von 23 °C. Sie ist zudem räucherbar bzw. durchlässig für Rauchbestandteile. Das bedeutet, dass farb- und aromagebende Substanzen, wie sie in gasförmigem oder kondensierten, durch Verschwelung von Holz entstandenem Rauch vorkommen, in praxisrelevanten Mengen durch die Hülle hindurchdiffundieren können.

Hergestellt wird die erfindungsgemäße Hülle nach dem Prinzip der thermoplastischen Coextrusion kombiniert mit einem Schlauchblasverfahren oder einem Verfahren der biaxialen Schlauch-Streckorientierung
Die beim Schlauchblasverfahren erhaltene Hülle wird im Rahmen der Erfindung als "unverstreckte" Schlauchfolie bezeichnet. Hiermit sind Schlauchfolien gemeint, die bei der Formgebung im Schmelzezustand, nicht aber bei Temperaturen unterhalb der Kristallisations-Temperatur bzw. unterhalb der Erweichungstemperatur bei amorphen Werkstoffen gedehnt werden. Hierbei werden die zwei oder mehr ringförmig coextrudierten, aufeinander liegenden Schmelzen durch Aufblasen in Umfangsrichtung (Querrichtung) und mittels angetriebener Quetschwalzen in Längsrichtung gedehnt Da die Verformung unmittelbar aus der Schmelze erfolgt, ist der Orientierungsgrad der Polymerketten gering und vernachlässigbar. Man spricht dabei von unorientierten Folien.

Bei der biaxialen Streckorientierung wird zunächst durch Coextrusion der zwei oder mehr Schmelzen ein Schlauch mit relativ hoher Wandstärke hergestellt. Dieser wird nur wenig oder gar nicht aufgeblasen. Anschließend wird dieser sogenannte Primärschlauch schnell abgekühlt. In einem darauf folgenden Schritt wird der Primärschlauch auf die zur biaxialen Streckorientierung erforderliche Temperatur aufgeheizt und dann durch einen von innen wirkenden Gasdruck und mittels angetriebener Quetschwalzen in Quer- und in Längsrichtung verstreckt. Dabei wird ein hoher Orientierungsgrad der Polymerketten in beiden Richtungen erreicht. Längs- und Querstreckverhältnisse befinden sich in dem in der Praxis allgemein üblichen Bereich. Sie richten sich vornehmlich nach der Art der verwendeten (Co-)Polyamide.

Nach der biaxialen Streckorientierung erfolgt zweckmäßig noch eine teilweise oder vollständige Thermofixierung. Hierdurch kann der Schrumpf der Hülle auf den gewünschten Wert eingestellt werden. Streckorientierte Kunststoff-Wursthüllen zeigen in der Regel einen Schrumpf von weniger als 25% in Längs- und in Querrichtung, bevorzugt von 8 bis 20 % in Längs- und Querrichtung, wenn sie 1 min in Wasser von 90°C eingelegt werden. Zur Thermofixierung wird die Hülle vorzugsweise mittels eines zwischen zwei Quetschwalzenpaaren eingebrachten Gasvolumens aufgeblasen und durch einen mit IR-Strahlern oder Heißluft beheizten Kanal geführt.

Das Gesamtverfahren wird in Fachkreisen auch als "Double-Bubble"- bzw. "Triple-Bubble"-Verfahren bezeichnet.

Die nach dem Schlauchblasverfahren hergestellte Hülle weist vorzugsweise eine Dicke von 40 bis 150 µm und die unter biaxialer Streckorientierung hergestellte Hülle vorzugsweise eine Dicke von 20 bis 75 µm auf. Für den Einsatz als Wursthülle ist die unter biaxialer Streckorientierung hergestellte Variante bevorzugt.

Die erfindungsgemäße Hülle kann anschließend noch zu einseitig abgebundenen Abschnitten oder abschnittsweise zu sogenannten Raffraupen konfektioniert werden. Ferner kann sie zu einem sogenannten Kranzdarm geformt werden. Dazu wird die Hülle aufgeblasen, asymmetrisch mit Heißluft oder mit Wärmestrahlung beaufschlagt und mittels eines Kranzwerkzeugs in eine schraubenförmige Geometrie überführt.

Die nachfolgenden Beispiele dienen der Erläuterung, ohne limitierenden Charakter für den Umfang der Erfindung zu haben. Prozente sind Gewichtsprozente, soweit nicht anders angegeben oder aus dem Zusammenhang ersichtlich.

Folgende Ausgangsmaterialien wurden eingesetzt:

**Aliphatische Polyamide:**

| | |
|---|---|
| PA1: | Polyamid 6/66 mit einer relativen Viskosität von 4,0 (gemessen in 96%iger Schwefelsäure) und einer Kristallitschmelztemperatur von ca. 195°C (UItramid^{®} C40 L 07 der BASF SE) |
| PA2: | Polyamid 6 mit einer relativen Viskosität von 4,0 (gemessen in 96%iger Schwefelsäure) und einer Kristallitschmelztemperatur von ca. 220°C (Ultramid^{®} B40 der BASF SE) |

**Hydrophiles Polymer:**

| | |
|---|---|
| PVP: | pulverförmiges Polyvinylpyrrolidon mit einem K-Wert nach Fikentscher von 16-17,5 (gemessen in Wasser) (Plasdone^{®} K-17 der Ashland Inc.) |

**Polyether-Block-Copolymere:**

| | |
|---|---|
| PEA | Polyether-amid, aufgebaut aus Blöcken von Polyethylenglykol und Poly-(co-laurinlactam) und mit einer Kristallitschmelztemperatur von ca. 158°C (PEBAX^{®} MV 3000 SP 01 der Arkema SA) |
| PEE | Polyether-ester, aufgebaut aus Blöcken von Polyethylenglykol und Poly-butylenterephthalat und mit einer Kristallitschmelztemperatur von ca. 185°C (Arnitel^{®} VT 3118 der DSM Engineering Plastics BV) |
| PA-AB | Masterbatch aus Quarzmehl und Polyamid 6, Gewichtsverhältnis 10 : 90, (Grilon^{®} XE 3690 der Ems-Chemie AG) |

### Beispiel 1

### Herstellung eines Compounds aus Polyamid und Polyvinylpyrrolidon

In einen handelsüblichen Zweiwellenkneter (Zylinderdurchmesser 25mm, L/D-Verhältnis 36, 12 Gehäuse, Aufgabestellen für Granulat an Gehäuse 1 und für Pulver an Gehäuse 7, mit Zweiloch-Austrittsdüse, Hersteller Coperion GmbH) wurden PA1 und PVP in einem Masseverhältnis von 85% zu 15% eindosiert. Bei einer Schneckendrehzahl von 200 Upm und einer Temperierung im Bereich von 120°C bis 210°C wurde das Polyamid aufgeschmolzen und mit dem PVP zu einem plastischen Compound vermischt. Der aus der Düse austretende transparente Strang wurde durch Eintauchen in ein Wasserbad gekühlt und nach seiner Verfestigung mittels Stranghäcksler zu Granulatkörnern zerteilt. Das Granulat wurde bei ca. 100°C in einem Umlufttrockner getrocknet. Nachfolgend ist das Granulat als Comp. 1 bezeichnet.

### Beispiel 2

### Herstellung einer dreischichtigen, biaxial verstreckten Hülle

Die Komponenten gemäß nachfolgender Tabelle 1 wurden den drei Extrudern einer handelsüblichen Coextrusions- und Schlauchstreckanlage (Double-Bubble-Anlage mit 3-Schicht-Coextrusionsringdüse) zugeführt. In den Extrudern wurden die Komponenten aufgeschmolzen, zu Blends homogenisiert und in Richtung der Düse gefördert. In der Düse wurden die Schmelzeströme axial durch ringförmige Kanäle gepresst und konzentrisch zusammengeführt. Der aus dem Ringspalt austretende Schmelzefilm wurde mittels eines Kalibrators zu einem Primärschlauch mit 13 mm Durchmesser geformt und auf Raumtemperatur abgekühlt. Anschließend wurde der Primärschlauch wieder auf ca. 80°C erwärmt und mittels eines eingebrachten Luftpolsters in Quer- und in Längsrichtung verstreckt. Die Verstreckverhältnisse betrugen 3,30 in Quer- und 1,95 in Längsrichtung. Der verstreckte Schlauch wurde durch Quetschwalzen geführt, anschließend mit einem zweiten Luftpolster beaufschlagt und durch einen mit IR-Strahlern bestückten Fixierkanal geführt. Dabei erreichte der Schlauch eine Oberflächentemperatur von ca. 150°C. Schließlich wurde der Schlauch erneut abgequetscht, im flachliegenden Zustand gekühlt und aufgewickelt. Die entstandene Hülle hatte einen Durchmesser von 43 mm und eine Foliendicke von 28 bis 32 µm.

**Tabelle 1**

| Extruder | zugeführte Komponenten | | anteilige Schichtdicke [%] |
|---|---|---|---|
| | Bezeichnung | Gew.-% | |
| A | Comp. 1 | 85 | 10 |
| | PA2 | 10 | |
| | PA-AB | 5 | |
| B | Comp. 1 | 100 | 80 |
| C → innen liegende Schicht | PA2 | 80 | 10 |
| | PEA | 15 | |
| | PA-AB | 5 | |

### Beispiel 3

Beispiel 2 wurde wiederholt mit dem Unterschied, daß Extruder C mit Komponenten gemäß nachfolgender Tabelle 2 beaufschlagt wurde.

**Tabelle 2**

| Extruder | zugeführte Komponenten | |
|---|---|---|
| | Bezeichnung | Gew.-% |
| C → innenliegende Schicht | PA2 | 65 |
| | PEA | 30 |
| | PA-AB | 5 |

### Beispiel 4

Beispiel 2 wurde wiederholt mit dem Unterschied, daß Extruder C mit Komponenten gemäß nachfolgender Tabelle 3 beaufschlagt wurde.

**Tabelle 3**

| Extruder | zugeführte Komponenten | |
|---|---|---|
| | Bezeichnung | Gew.-% |
| C → innenliegende Schicht | PA2 | 75 |
| | PEE | 20 |
| | PA-AB | 5 |

### Beispiel 5

Beispiel 2 wurde wiederholt mit dem Unterschied, daß Extruder C mit Komponenten gemäß nachfolgender Tabelle 4 beaufschlagt wurde.

**Tabelle 4**

| Extruder | zugeführte Komponenten | |
|---|---|---|
| | Bezeichnung | Gew.-% |
| C → innen liegende Schicht | PA2 | 55 |
| | PEE | 40 |
| | PA-AB | 5 |

### Vergleichsbeispiel 1 (V1)

Beispiel 2 wurde wiederholt mit dem Unterschied, daß Extruder C mit Komponenten gemäß nachfolgender Tabelle 5 beaufschlagt wurde.

**Tabelle 5**

| Extruder | zugeführte Komponenten | |
|---|---|---|
| | Bezeichnung | Gew.-% |
| C → innenliegende Schicht | PA2 | 65 |
| | Comp. 1 | 30 |
| | PA-AB | 5 |

### Vergleichsbeispiel 2 (V2)

Beispiel 2 wurde wiederholt mit dem Unterschied, daß Extruder C mit Komponenten gemäß nachfolgender Tabelle 6 beaufschlagt wurde.

**Tabelle 6**

| Extruder | zugeführte Komponenten | |
|---|---|---|
| | Bezeichnung | Gew.-% |
| C → innenliegende Schicht | PA2 | 95 |
| | PA-AB | 5 |

### Vergleichsbeispiel 3 (V3)

### Herstellung einer einschichtigen, biaxial verstreckten Hülle

Die Komponenten gemäß nachfolgender Tabelle 6 wurden dem Extruder einer Extrusions- und Schlauchstreckanlage (Double-Bubble-Anlage mit 1-Schicht-Extrusionsringdüse) zugeführt. Im Extruder wurden die Komponenten aufgeschmolzen, homogenisiert und in Richtung der Düse gefördert. In der Düse wurde der Schmelzestrom axial durch einen ringförmigen Kanal gepresst. Der aus dem Ringspalt austretende Schmelzefilm wurde mittels eines Kalibrators zu einem Primärschlauch mit 14 mm Durchmesser geformt und auf Raumtemperatur abgekühlt. Anschließend wurde der Primärschlauch wieder auf ca. 80°C erwärmt und mittels eines eingebrachten Luftpolsters in Quer- und in Längsrichtung verstreckt. Die Verstreckverhältnisse betrugen 3,07 in Quer- und 2,15 in Längsrichtung. Die weiteren Schritte erfolgten analog Beispiel 1. Die entstandene nahtlose Hülle hatte einen Durchmesser von 43 mm und eine Foliendicke von 23 bis 28 □m.

**Tabelle 7**

| Extruder | zugeführte Komponenten | |
|---|---|---|
| | Bezeichnung | Gew.-% |
| A → Gesamtschicht | PA2 | 10 |
| | Comp. 1 | 85 |
| | PA-AB | 5 |

Zur Beurteilung der Hüllen erfolgten Messungen der Wasserdampfdurchlässigkeit unter Laborbedingungen sowie eine anwendungsbezogene Ausprüfung. Letztere ergab Aufschluss über die Durchlässigkeit der Hüllen unter praktischen Bedingungen und über die Adhäsion am Füllgut. Das Füllgut war Rohwurst (Salami). Die Ergebnisse sind in Tabelle 8 zusammengestellt. Bei der anwendungsbezogenen Ausprüfung wurde wie folgt vorgegangen: Hüllenabschnitte wurden bei konstantem Fülldruck mit handelsüblichem Salami-Wurstbrät gefüllt, an den Enden mit Metallclips verschlossen und gewogen. Die Abfüllungen wurden in einer Klimakammer aufgehängt und unter Anwendung eines für Salami üblichen Temperatur- und Feuchteprofils zur Fermentation, Reifung und Abtrocknung gebracht. Die Gesamt-Verweilzeit in der Klimakammer betrug 14 Tage. Anschließend wurde die Gewichtsveränderung jeder Wurst gemessen. Zur Prüfung der Adhäsion bzw. Haftung der Hüllen auf der Wurstoberfläche wurden die Würste in Scheiben von ca. 2 cm Dicke zerteilt. Die auf den Scheiben sitzende Hülle wurde axial durchtrennt. An der Trennstelle wurde die Hülle abgehoben und manuell in Umfangsrichtung abgeschält. Es erfolgte eine Beurteilung nach einer Notenskala von 1 bis 10:
1 = keinerlei Haftung; Hülle ist ohne Kraft abziehbar, keine Brätanhaftungen ...
5 = deutliche Haftung: Hülle ist mit mäßigem Kraftaufwand abziehbar, geringe Brätanhaftungen
10 = sehr starke Haftung: Abziehen erfordert hohe Kraft, dabei Ausreißen größerer Brätstücke

**Tabelle 8: Prüfergebnisse**

| Beispiel | Wasserdampfdurchlässigkeit ¹⁾ [g/m² d] | Gewichtsverlust der Wurstabfüllung | Note Abschälverhalten |
|---|---|---|---|
| 2 | 142 | 21 | 3 |
| 3 | 175 | 22 | 1 |
| 4 | 118 | 17 | 4 |
| 5 | 138 | 20 | 2 |
| V1 | 181 | 23 | 9 |
| V2 | 19 | 6 | 6 |
| V3 | 219 | 25 | 10 |

| | | | |
|---|---|---|---|
| 1) gemessen nach ISO 15106-3 bei einem Feuchtegefälle 85% zu 0% relativer Feuchte und bei 23°C | | | |

Die vorstehenden Daten bestätigen, dass die Hüllen mit erfindungsgemäß zusammengesetzter Schicht auf der Innenseite nur eine geringe bis mäßige Adhäsion zum Füllgut Salami aufweisen. Bei den Hüllen, wo die Schicht auf der Innenseite gemäß Stand der Technik zusammengesetzt ist, liegt die Adhäsion hingegen auf mittlerem bis hohen Niveau. Weiterhin belegen die Daten, dass die Feuchte-Durchlässigkeit der erfindungsgemäßen Hüllen auf annähernd so hohem Niveau liegt wie bei Hüllen nach Stand der Technik (V3).

## Patentansprüche

1. Schlauchförmige, nahtlose, wasserdampfdurchlässige, räucherbare, biaxial streckorientierte und teilweise oder vollständig thermofixierte Nahrungsmittelhülle mit mindestens zwei Schichten auf Basis von thermoplastischen Polymeren, **dadurch gekennzeichnet, dass** mindestens eine Schicht A, die nicht die Innenschicht bildet, ein Blend aus aliphatischem (Co-)Polyamid und mindestens einem hydrophilen Polymer umfaßt, und dass die Innenschicht I aus einem Blend aus 40 bis 90 Gew.-% aliphatischem (Co-)Polyamid und 60 bis 10 Gew.-% eines Block-Copolymers, ausgewählt aus Polyether-amid, Polyether-ester und Polyether-urethan, besteht, wobei die Innenschicht I gegebenenfalls ein oder mehrere Additiv(e) enthält, ausgewählt aus Mitteln welche die Blockneigung der Hüllenoberflächen aneinander verringern, Farbstoffen und Pigmenten.

2. Nahrungsmittelhülle gemäß Anspruch 1, **dadurch gekennzeichnet, dass** das hydrophile Polymer Polyvinylpyrrolidon, Polyvinylalkohol oder ein teilverseiftes Polyvinylacetat, ein Copolymer mit Vinylalkohol-Einheiten, ein Polyalkylenglykol oder ein Copolymer mit Alkylenglykol-Einheiten, ein Polymerisat von N-Vinylalkylamiden oder ein Homopolymer aus oder ein Copolymer mit Einheiten von α,β-ungesättigten Carbonsäuren oder α,β-ungesättigten Carbonsäureamiden ist.

3. Nahrungsmittelhülle gemäß Anspruch 1 oder 2, **dadurch gekennzeichnet, dass** das aliphatische oder isocyclische (Co-)Polyamid ein Polyamid 6, ein Copolyamid aus ε-Caprolactam und ω-Laurinlactam (PA 6/12), ein Copolyamid aus ε-Caprolactam, Hexamethylendiamin und Adipinsäure (PA 6/66) oder ein Copolyamid aus ε-Caprolactam, 3-Aminomethyl-3,5,5-trimethyl-cyclohexylamin (Isophorondiamin) und Isophthalsäure ist.

4. Nahrungsmittelhülle gemäß einem oder mehreren der Ansprüche 1 bis 3, **dadurch gekennzeichnet, dass** die Schicht A ein Blend aus 60 bis 95 Gew.-% eines oder mehrerer aliphatischer (Co-)Polyamide und 5 bis 40 Gew.-% eines oder mehrerer hydrophiler Polymere umfaßt.

5. Nahrungsmittelhülle gemäß einem oder mehreren der Ansprüche 1 bis 4, **dadurch gekennzeichnet, dass** sie aus der Schicht I und zwei Schichten A mit verschiedener Zusammensetzung besteht.

6. Nahrungsmittelhülle gemäß einem oder mehreren der Ansprüche 1 bis 5, **dadurch gekennzeichnet, dass** sie einen Durchmesser (Kaliber) von 28 bis 90 mm, bevorzugt von 34 bis 60 mm, und eine Wandstärke von 15 bis 80 µm aufweist.

7. Nahrungsmittelhülle gemäß einem oder mehreren der Ansprüche 1 bis 6, **dadurch gekennzeichnet, dass** die Innenschicht I eine Dicke von 2 bis 12 µm aufweist.

8. Nahrungsmittelhülle gemäß einem oder mehreren der Ansprüche 1 bis 7, **dadurch gekennzeichnet, dass** sie einem Schrumpf von weniger als 25 % in Längs- und Querrichtung, bevorzugt von 5 bis 15 % in Längs- und Querrichtung zeigt, wenn sie eine Minute lang in 90 °C warmes Wasser eingelegt wurde.

9. Nahrungsmittelhülle gemäß einem oder mehreren der Ansprüche 1 bis 8, **dadurch gekennzeichnet, dass** sie eine Wasserdampfdurchlässigkeit von 80 bis 220 g/m² d aufweist, gemessen gemäß DIN ISO 15106-3 bei einem Feuchtegefälle von 85 zu 0 % und bei einer Temperatur von 23 °C.

10. Verfahren zur Herstellung einer Nahrungsmittelhülle gemäß einem oder mehreren der Ansprüche 1 bis 9, **dadurch gekennzeichnet, dass** es durch Coextrusion kombiniert mit einem Schlauchblasverfahren oder durch ein Verfahren mit biaxialer Schlauch-Streckorientierung erfolgt.

11. Verfahren gemäß Anspruch 10, **dadurch gekennzeichnet, dass** die Nahrungsmittelhülle zu einseitig abgebundenen Abschnitten oder zu Raffraupen konfektioniert wird.

12. Verwendung der Nahrungsmittelhülle gemäß einem oder mehreren der Ansprüche 1 bis 9 als künstliche Wursthülle, insbesondere für luftgetrocknete, gegebenenfalls geräucherte Rohwurst, speziell Salami.

## Claims

1. Tubular, seamless, water-vapour-permeable, smokable, biaxially draw-oriented and partially or completely heat-set food casing having at least two layers based on thermoplastic polymers, **characterized in that** at least one layer A, which does not form the inside layer, comprises a blend of aliphatic (co)polyamide and at least one hydrophilic polymer, and **in that** the inside layer I comprises a blend of 40 to 90 % by weight of aliphatic (co)polyamide and 60 to 10 % by weight of a block copolymer selected from polyether-amide, polyether-ester and polyether-urethane, the inside layer I optionally comprising one or more additives selected from agents which lower the tendency of the casing surfaces to block to one another, dyes and pigments.

2. Food casing according to Claim 1, **characterized in that** the hydrophilic polymer is polyvinylpyrrolidone, polyvinyl alcohol or a partially hydrolysed polyvinyl acetate, a copolymer having vinyl alcohol units, a polyalkylene glycol or a copolymer having alkylene glycol units, a polymer of N-vinylalkylamides or a homopolymer composed of or a copolymer having units of α,β-unsaturated carboxylic acids or α,β-unsaturated carboxamides.

3. Food casing according to Claim 1 or 2, **characterized in that** the aliphatic (co)polyamide is a polyamide 6, a copolyamide of ε-caprolactam and ω-laurolactam (PA 6/12), a copolyamide of ε-caprolactam, hexamethylenediamine and adipic acid (PA 6/66) or a copolyamide of ε-caprolactam, 3-aminomethyl-3,5,5-trimethylcyclohexylamine (isophoronediamine) and isophthalic acid.

4. Food casing according to one or more of Claims 1 to 3, **characterized in that** the layer A comprises a blend of 60 to 95 % by weight of one or more aliphatic (co)polyamides and 5 to 40 % by weight of one or more hydrophilic polymers.

5. Food casing according to one or more of Claims 1 to 4, **characterized in that** it consists of the layer I and two layers A having different composition.

6. Food casing according to one or more of Claims 1 to 5, **characterized in that** it has a diameter (calibre) of 28 to 90 mm, preferably of 34 to 60 mm, and a wall thickness of 15 to 80 µm.

7. Food casing according to one or more of Claims 1 to 6, **characterized in that** the inside layer I has a thickness of 2 to 12 µm.

8. Food casing according to one or more of Claims 1 to 7, **characterized in that** it exhibits a shrinkage of less than 25 % in longitudinal and transverse directions, preferably of 5 to 15 % in longitudinal and transverse directions, when placed for one minute into water having a temperature of 90 °C.

9. Food casing according to one or more of Claims 1 to 8, **characterized in that** it has a water vapour permeability of 80 to 220 g/m² d, measured according to DIN ISO 15106-3 with a moisture gradient from 85 to 0 % and at a temperature of 23 °C.

10. Method for producing a food casing according to one or more of Claims 1 to 8, **characterized in that** it takes place by coextrusion combined with a tubular-film blowing process or by a process with biaxial tubular-film draw-orientation.

11. Method according to Claim 10, **characterized in that** the food casing is processed into sections tied off at one end or into shirred sticks.

12. Use of the food casing according to one or more of Claims 1 to 8 as synthetic sausage casing, more particularly for air-dried, optionally smoked raw sausage, especially salami.

## Revendications

1. Enveloppe pour produits alimentaires tubulaire, sans soudure, perméable à la vapeur d'eau, pouvant être fumée, orientée par étirage biaxialement et partiellement ou entièrement thermofixée comprenant au moins deux couches à base de polymères thermoplastiques, **caractérisée en ce qu'**au moins une couche A qui ne forme pas la couche interne, comporte un mélange de (co-)polyamide aliphatique et au moins un polymère hydrophile, et **en ce que** la couche interne I se compose d'un mélange composé de 40 à 90 % en poids de (co-)polyamide aliphatique et de 60 à 10 % en poids d'un copolymère bloc, choisi parmi polyéther-amide, polyéther-ester et polyéther-uréthane, la couche interne I contenant le cas échéant un ou plusieurs additifs, choisis parmi des agents qui réduisent la tendance au blocage des surfaces d'enveloppe les unes aux autres, des colorants et des pigments.

2. Enveloppe pour produits alimentaires selon la revendication 1, **caractérisée en ce que** le polymère hydrophile est la polyvinylpyrrolidone, l'alcool polyvinylique, ou un acétate de polyvinyle partiellement saponifié, un copolymère comprenant des unités d'alcool vinylique, un polyalkylèneglycol ou un copolymère comprenant des unités d'alkylèneglycol, un polymérisat de N-vinylalkylamides ou un homopolymère de ou un copolymère comprenant des unités d'acides carboxyliques α,β-insaturés ou des amides d'acides carboxyliques α,β-insaturés.

3. Enveloppe pour produits alimentaires selon la revendication 1 ou 2, **caractérisée en ce que** le (co-)polyamide aliphatique est un polyamide 6, un copolyamide composé de ε-caprolactame et ω-laurinlactame (PA 6/12), un copolyamide composé de ε-caprolactame, hexaméthylènediamine et acide adipique (PA 6/66) ou un copolyamide composé de ε-caprolactame, 3-amino-3,5,5-triméthylcyclohexylamine (isophorone diamine) et acide isophtalique.

4. Enveloppe pour produits alimentaires selon l'une quelconque ou plusieurs des revendications 1 à 3, **caractérisée en ce que** la couche A comporte un mélange composé de 60 à 95 % en poids d'un ou plusieurs (co-)polyamides aliphatiques et de 5 à 40 % en poids d'un ou plusieurs polymères hydrophiles.

5. Enveloppe pour produits alimentaires selon l'une quelconque ou plusieurs des revendications 1 à 4, **caractérisée en ce qu'**elle se compose de la couche I et de deux couches A de composition différente.

6. Enveloppe pour produits alimentaires selon l'une quelconque ou plusieurs des revendications 1 à 5, **caractérisée en ce qu'**elle présente un diamètre (calibre) allant de 28 à 90 mm, de préférence de 34 à 60 mm, et une épaisseur de paroi allant de 15 à 80 µm.

7. Enveloppe pour produits alimentaires selon l'une quelconque ou plusieurs des revendications 1 à 6, **caractérisée en ce que** la couche interne I présente une épaisseur allant de 2 à 12 µm.

8. Enveloppe pour produits alimentaires selon l'une quelconque ou plusieurs des revendications 1 à 7, **caractérisée en ce qu'**elle montre un rétrécissement de moins de 25 % en direction longitudinale et en direction transversale, de préférence de 5 à 15 % en direction longitudinale et en direction transversale, lorsqu'elle est introduite dans de l'eau chaude à 90 °C pendant une minute.

9. Enveloppe pour produits alimentaires selon l'une quelconque ou plusieurs des revendications 1 à 8, **caractérisée en ce qu'**elle présente une perméabilité à la vapeur d'eau allant de 80 à 220 g/m² d, mesurée conformément à la norme DIN ISO 15106-3 pour un gradient d'humidité de 85 à 0 % et pour une température de 23 °C.

10. Procédé de production d'une enveloppe pour produits alimentaires selon l'une quelconque ou plusieurs des revendications 1 à 8, **caractérisé en ce qu'**il s'effectue par co-extrusion en association avec un procédé de soufflage tubulaire ou par un procédé comprenant une orientation par étirage tubulaire biaxiale.

11. Procédé selon la revendication 10, **caractérisé en ce que** l'enveloppe pour produits alimentaires est confectionnée en sections liées d'un seul côté ou en chenille plissée.

12. Utilisation de l'enveloppe pour produits alimentaires selon l'une quelconque ou plusieurs des revendications 1 à 8 comme boyau à saucisse artificiel, en particulier pour saucisse crue séchée à l'air, le cas échéant fumée, en particulier saucisson.
